# EUROPÄISCHE PATENTSCHRIFT

(11) **EP 3 592 990 B1**
(45) Veröffentlichungstag und Bekanntmachung des Hinweises auf die Patenterteilung: **13.11.2024**
(21) Anmeldenummer: 18710045.8
(22) Anmeldetag: 08.03.2018
(51) Int. Cl.: F15B 13/08, H01R 12/79

(54) **STEUEREINRICHTUNG**
CONTROL DEVICE
SYSTÈME DE COMMANDE

(30) Priorität: 10.03.2017 DE 102017002471
(43) Veröffentlichungstag der Anmeldung: 15.01.2020
(73) Patentinhaber: Hydac Systems & Services GmbH, 66280 Sulzbach/Saar (DE)
(72) Erfinder: BIWERSI, Sascha Alexander, 66693 Mettlach (DE); SUMPF, Kai, 66773 Schwalbach (DE); SCHMITT, Stephan, Peter, 66111 Saarbrücken (DE)
(74) Vertreter: Bartels und Partner, Patentanwälte
(86) Internationale Anmeldenummer: PCT/EP2018/055830
(87) Internationale Veröffentlichungsnummer: WO 2018/162677

(56) Entgegenhaltungen:
- EP-A1- 1 222 402
- EP-A1- 2 441 968
- EP-A2- 0 881 396
- EP-A2- 1 041 327
- US-B1- 6 213 153

## Beschreibung

Die Erfindung betrifft eine Steuereinrichtung.

Eine Steuereinrichtung für eine Ventilvorrichtung ist beispielsweise aus der EP 2 241 765 B1 bekannt. In die bekannte Ventilvorrichtung ist eine den Steuersektionen funktionell zugeordnete Umlaufventilsektion, die mit einer intelligenten Umlaufventilsteuerung versehen ist, baulich integriert. Die intelligente Umlaufventilsteuerung ist zur Kommunikation mit wenigstens einer Steuersektion mit einer Kommunikationsverbindung an eine Kommunikationsbusverkabelung angeschlossen. Die Kommunikationsbusverkabelung und die Kommunikationsverbindung entsprechen einer CAN-Busspezifikation. Der CAN-Bus ist ein weit verbreiteter Industriestandard und gewährleistet Kompatibilität und Wahrung von Sicherheitsfunktionen bei Kombinationen von Komponenten unterschiedlicher Hersteller. Auch Systemwartung und Konfiguration vereinfachen sich bei standardisierten Komponenten.

Bei einer Verbindung von einzelnen Steuersektionen mittels eines eigens dafür angefertigten Kabelbaums oder einer Reihenverschaltung, im Fachjargon auch "Daisy Chain" genannt, ist der Anschluss von Steuersektionen in unterschiedlicher Anzahl oder eine nachträgliche Erweiterung des Steuerblocks um zusätzliche Steuersektionen mit einem hohen Mehraufwand verbunden. Zudem können die an Y-Stellen der Kabelbäume erforderlichen Abdichtungen mögliche Schwachstellen bei IP-Schutzklassentests sein.

Die EP 0 881 396 A2 beschreibt eine Steuereinrichtung mit mehreren, modular aufgebauten Steuersektionen, die in Nebeneinanderanordnung einen Steuerblock bilden und Einheiten einer elektromagnetisch betätigbaren Aktorik und/oder einer Sensorik aufweisen zur Ansteuerung bzw. Überwachung einer Ventilvorrichtung, die an eine zentrale Energieversorgung und/oder Überwachungseinrichtung angeschlossen sind, die einzelne, der jeweiligen Steuersektion zugeordnete Anschlussteile aufweisen, die in Reihe hintereinander und miteinander verschaltet sind, wobei zumindest ein Teil der eingesetzten Anschlussteile in kabelloser Weise mit ihren einander zugewandten und benachbarten Stecker- und Buchsenteilen in direktem Eingriff miteinander sind, wobei zumindest ein Teil der eingesetzten Anschlussteile T-stückartig ausgebildet ist mit jeweils einander gegenüberliegend angeordneten Stecker- und Buchsenteilen und einem quer, vorzugsweise senkrecht, dazu angeordneten und ausgerichteten Kontaktteil zum Anschluss an die jeweilige Steuersektion, und wobei die miteinander verbundenen T-stückartigen Anschlussteile mit ihren miteinander verbundenen Stecker- und Buchsenteilen einen quer, vorzugsweise senkrecht, zur Nebeneinanderanordnung der Steuersektionen verlaufenden Anschlussstrang bilden, welcher über die in Richtung der Steuersektionen ausgerichteten Kontaktteile an diese angeschlossen ist.

Weitere Steuereinrichtungen gehen aus der EP 2 441 968 A1, der EP 1 041 327 A2, der US 6 213 153 B2 und der EP 1 222 402 A0 hervor.

Der Erfindung liegt die Aufgabe zugrunde, die Verschaltung einzelner Steuersektionen in einem Steuerblock dahingehend zu vereinfachen, dass problemlos Steuersektionen unterschiedlicher Anzahl miteinander verbunden werden können sowie die Anzahl der Steuersektionen auch nachträglich erweitert werden kann. Weiter sollen die Betriebssicherheit und die Störanfälligkeit einer entsprechenden Verschaltung erhöht sein.

Diese Aufgabe wird gelöst durch eine Steuereinrichtung mit den Merkmalen des Patentanspruchs 1 in seiner Gesamtheit sowie durch eine Ventilvorrichtung mit den Merkmalen des Patentanspruchs 8 in ihrer Gesamtheit.

Vorteilhafte Ausgestaltungen der Erfindung sind Gegenstand der Unteransprüche.

Gemäß Anspruch 1 ist eine Steuereinrichtung mit mehreren, modular aufgebauten Steuersektionen vorgesehen, die in Nebeneinanderanordnung einen Steuerblock bilden und Einheiten einer elektromagnetisch betätigbaren Aktorik und/oder einer Sensorik aufweisen zur Ansteuerung bzw. Überwachung einer Ventilvorrichtung, die an eine zentrale Energieversorgung und/oder Überwachungseinrichtung anschließbar sind, die einzelne, der jeweiligen Steuersektion zugeordnete Anschlussteile aufweisen, die in Reihe hintereinander und miteinander verschaltet sind, wobei zumindest ein Teil der eingesetzten Anschlussteile in kabelloser Weise mit ihren einander zugewandten und benachbarten Stecker- und Buchsenteilen in direktem Eingriff miteinander sind, wobei zumindest ein Teil der eingesetzten Anschlussteile T-stückartig ausgebildet ist mit jeweils einander gegenüberliegend angeordneten Stecker- und Buchsenteilen und einem quer, vorzugsweise senkrecht, dazu angeordneten und ausgerichteten Kontaktteil zum Anschluss an die jeweilige Steuersektion, wobei die miteinander verbundenen T-stückartigen Anschlussteile mit ihren miteinander verbundenen Stecker- und Buchsenteilen einen quer, vorzugsweise senkrecht, zur Nebeneinanderanordnung der Steuersektionen verlaufenden Anschlussstrang bilden, welcher über die in Richtung der Steuersektionen ausgerichteten Kontaktteile an diese angeschlossen ist, wobei zur Lagefixierung der miteinander verbundenen und/oder der an die jeweilige Steuersektion angeschlossenen Anschlussteile Rastmittel vorgesehen sind, und wobei in einem einem jeweiligen Verbindungsbereich zugeordneten Endabschnitt der Kontaktteile und der Buchsenteile eine Dichteinrichtung angeordnet ist.

Es ist vorgesehen, dass zumindest ein Teil der eingesetzten Anschlussteile in kabelloser Weise mit ihren einander zugewandten und benachbarten Stecker- und Buchsenteilen in direktem Eingriff miteinander sind. Die einzelnen Anschlussteile werden entsprechend der erforderlichen Anzahl zu einer Längsverkettung zusammengesetzt und bilden insoweit eine Verschaltung der einzelnen Steuersektionen. Neben einer einfachen Erweiterungsmöglichkeit durch Anstecken weiterer Anschlussteile ergibt sich weiter der Vorteil, dass bei Defekt eines Anschlussteils dieses in einfacher und unkomplizierter Weise ausgebaut und ausgetauscht werden kann.

Je nach Einsatzdauer und Einsatzzweck können die Anschlussteile wiederverwendet und in neuen Konstellationen zusammengesetzt werden. Typischerweise sind die Steuersektionen und die den einzelnen Steuersektionen zugeordneten Anschlussteile gleichartig ausgestaltet. Es ist jedoch auch denkbar, anforderungsindividuell unterschiedliche Steuersektionen und/oder unterschiedliche Anschlussteile, beispielsweise mit unterschiedlichen Formen und Dimensionen, zu wählen. Durch die miteinander verbundenen Stecker- und Buchsenteile ist neben einer elektrischen Verbindung ein stabiler mechanischer Verbund gewährleistet. Eine Verschaltung mit den erfindungsgemäßen Anschlussteilen kann in jeglicher Steuereinrichtung mit mehreren Steuersektionen für eine Ventilvorrichtung, wie beispielsweise in der oben erwähnten EP 2 241 765 B1, der DE 10 2013 021 317 A1 und der nachveröffentlichten DE 10 2016 011 860 A1 offenbart, eingesetzt werden.

Zumindest ein Teil der eingesetzten Anschlussteile ist T-stückartig ausgebildet mit jeweils einander gegenüberliegend angeordneten Stecker- und Buchsenteilen und einem quer, vorzugsweise senkrecht, dazu angeordneten und ausgerichteten Kontaktteil zum Anschluss an die jeweilige Steuersektion. Hieraus ergibt sich der Vorteil eines besonders kompakten Aufbaus der einzelnen Anschlussteile und der in diesen und mit diesen ausgebildeten Verschaltungen, wobei zweckmäßigerweise die Längenerstreckung der Stecker- und Buchsenteile entsprechend der Breite der nebeneinander angeordneten einzelnen Steuersektionen gewählt ist. Über die miteinander verbundenen Stecker- und Buchsenteile der T-stückartigen Anschlussteile wird eine Längsverkettung entlang einer vorgegebenen Richtung gebildet. Von diesem entlang einer Richtung verketteten und ausgerichteten Verbund zweigen die einzelnen Kontaktteile ab und stellen die Anschlussstellen zur jeweiligen Steuersektion dar.

Besonders bevorzugt sind die Kontaktteile senkrecht zu der durch Stecker- und Buchsenteil vorgegebenen Verbindungsrichtung ausgerichtet und weisen jeweils die gleiche Länge auf. Es ist jedoch auch vorstellbar, eine Ausrichtung in einem von 90° verschiedenen, vorgebbaren Winkel zu der von Stecker- und Buchsenteil vorgegebenen Richtung sowie unterschiedliche Längen der einzelnen Kontaktteile, beispielsweise in der Art von Stufen bei entsprechend angeordneten Steuersektionen, zu wählen.

Die miteinander verbundenen T-stückartigen Anschlussteile bilden mit ihren miteinander verbundenen Stecker- und Buchsenteilen einen quer, vorzugsweise senkrecht, zur Nebeneinanderanordnung der Steuersektionen verlaufenden Anschlussstrang, welcher über die in Richtung der Steuersektionen ausgerichteten Kontaktteile an diese angeschlossen ist, und wobei vorzugsweise der Verbund der einzelnen Teile durch Verrastungen oder Verschraubungen in Richtung des Anschlussstrangs und der Ausrichtung der an die jeweilige Steuersektion angeschlossenen Kontaktteile fixiert ist. Je nach Einbaulage verläuft der Anschlussstrang entlang der nebeneinander angeordneten Steuersektionen, wobei in der Regel die Kontaktteile eher kurz ausgestaltet sind und somit ein vergleichsweise naher Anbau des Anschlussstrangs an den aus den Steuersektionen gebildeten Steuerblock erreicht ist. Durch die Verrastungen oder Verschraubungen wird ein unerwünschtes Lösen der Anschlussteile wirksam verhindert. Hierbei ist sowohl der Verbund der einzelnen Anschlussteile entlang des Anschlussstrangs als auch der Anschluss der Anschlussteile an die einzelnen Steuersektionen gesichert. Eine zusätzliche Lagefixierung wird durch die Dichteinrichtungen erreicht, welche am Buchsenteil sowie am Kontaktteil derart angeordnet sind, dass beim Ineinanderführen von Stecker- und Buchsenteil bzw. von Steuersektions- und Kontaktteil die jeweilige Dichteinrichtung an beiden Teilen anliegt und einen ungewollten Schmutzeintritt am jeweiligen Verbindungsbereich unterbindet. Die Dichteinrichtungen sind typischerweise aus einem Elastomermaterial gebildet und verliersicher am Anschluss- bzw. Steuersektionsteil angeordnet.

Es sind zur Lagefixierung der miteinander verbundenen und/oder der an die jeweilige Steuersektion angeschlossenen Anschlussteile Rastmittel vorgesehen, vorzugsweise in der Form mindestens eines Rastteils, welches in eine zugehörige Aufnahme am jeweils anderen Anschlussteil bzw. am entsprechenden Steuersektionsteil eingreift. Zweckmäßigerweise ist das Rastteil aus einem biegeelastischen Material, wie einem Metallwerkstoff, einem Kunststoffmaterial oder einem geeigneten Verbundwerkstoff, ausgebildet und vorzugsweise einstückig mit einem Gehäuseteil des Anschlussteils bzw. des Steuersektionsteils ausgebildet. Eine gute Lagefixierung wird dadurch erreicht, dass im jeweiligen Verbindungsbereich mehrere, vorzugsweise zwei oder vier, Rastteile in bevorzugt gleichmäßiger Anordnung, typischerweise an gegenüberliegenden Seiten, angeordnet sind. Die Anschlussteile und Steuersektionsteile weisen im jeweiligen Verbindungsbereich einen rechteck-, kreis- oder ellipsenförmigen Querschnitt auf, es sind jedoch auch davon abweichende, beliebige Querschnittsformen vorstellbar.

Bei einer bevorzugten Ausführungsform der Erfindung weist das jeweilige Anschlussteil und/oder das jeweilige Steuersektionsteil zumindest in einem Verbindungsbereich eine Erweiterung gegenüber dem Querschnitt des Anschluss- oder Steuersektionsteils und im Bereich der Erweiterung eine zur Innenseite gerichtete Aufnahme oder ein Rastteil mit einer Rastnase auf, wobei an dem dem Verbindungsbereich zugeordneten Buchsen-, Stecker-, Kontakt- oder Steuersektionsteil ein korrespondierendes Rastteil mit einer zur Außenseite gerichteten Rastnase oder eine Aufnahme ausgebildet ist, welche beim Ineinanderführen von Stecker- und Buchsenteil bzw. von Steuersektions- und Kontaktteil in die jeweilige Aufnahme eingreift bzw. die jeweilige Rastnase aufnimmt. Über die Erweiterung, welche insoweit ein Gehäuseteil darstellt, wird der Querschnitt, der durch die dem jeweiligen Verbindungsbereich zugeordneten Teile vorgegeben ist, dahingehend erweitert, dass ein entsprechender Bauraum zur Anordnung der Rastmittel geschaffen ist. Somit sind die im Gehäuse des jeweiligen Anschlussteils bzw. des Steuersektionsteils geführten Leitungen, die Stecker-, Buchsen- und Kontaktteile miteinander verbinden, von der Anordnung und Ausbildung der Rastteile und zugehörigen Aufnahmen nicht betroffen. Hierbei ist das Rastteil an der Innenseite der Erweiterung und die zugehörige Aufnahme an der Außenseite des jeweils anderen Teils oder umgekehrt die Aufnahme an der Innenseite der Erweiterung und das Rastteil an der Außenseite des jeweils anderen Teils angeordnet und ausgebildet.

In einer weiteren bevorzugten Ausführungsform der erfindungsgemäßen Steuereinrichtung sind jeweils ein oder mehrere, vorzugsweise acht, Steckerelemente am Steckerteil, Buchsenelemente am Buchsenteil und Kontaktelemente am Kontaktteil ausgebildet und angeordnet, wobei die Stecker-, Buchsen- und Kontaktelemente anforderungsgerecht miteinander verschaltet sind. Durch die Verschaltung wird die Funktionsweise der einzelnen Anschlussteile für die Aktorik, Sensorik, Energieversorgung und/oder Überwachung der jeweiligen Steuersektion als Funktionselement im Steuerblock sichergestellt. Zweckmäßigerweise sind am Anschlussteil und am Steuersektionsteil normierte Stecker-, Buchsen- und Kontaktteile und -elemente ausgebildet mit vorgegebenen Belegungen und Verschaltungen der einzelnen Elemente.

Besonders bevorzugt sind in der Verschaltung des jeweiligen Anschlussteils vorgesehen eine Versorgungsspannung, vorzugsweise über ein oder zwei Stecker- und ein oder zwei Buchsenelemente, die paarweise miteinander und mit einem Kontaktelement verbunden sind, und/oder eine Erdung, vorzugsweise über ein oder zwei Stecker- und ein oder zwei Buchsenelemente, die paarweise miteinander und mit einem Kontaktelement verbunden sind, und/oder eine Erdung für Sensoren, vorzugsweise über ein Stecker- und ein Buchsenelement, die paarweise miteinander und mit einem Kontaktelement verbunden sind, und/oder eine CAN-Bus-Ansteuerung, vorzugsweise über ein oder zwei Stecker- und ein oder zwei Buchsenelemente, die paarweise miteinander und jeweils mit einem Kontaktelement verbunden sind, und/oder ein Identifier, vorzugsweise über ein Stecker- und ein Buchsenelement, die jeweils mit einem Kontaktelement verbunden sind, und/oder ein Steuerspannungsanschluss, vorzugsweise über ein Stecker- oder Buchsenelement, das mit einem Kontaktelement verbunden ist.

Aufgrund der vielfältigen Verschaltung ist das Kontaktieren der gesamten Steuersektion mittels eines einzigen Anschlussteils möglich, so dass ein umständlicher Kabelbaum entfallen kann. Die interne Kontaktierung der einzelnen Steuersektionen wird über die miteinander verbundenen Anschlussteile realisiert. Um hohe auftretende Ströme abfangen zu können, sind vorzugsweise die Versorgungsspannung und die Masse jeweils doppelt ausgeführt. Die Masse für Sensoren dient der Messsicherheit. Der Identifier wird dazu verwendet, die verschiedenen Steuersektionen mittels der CAN-Bus-Ansteuerung einzeln anzusteuern, insbesondere zwecks Ermittlung deren jeweiliger Position im Steuerblock.

Weiter ist vorteilhaft, dass die miteinander verbundenen Anschlussteile über zumindest einen Anschlussstecker an die zentrale Energieversorgung und/oder Überwachungseinrichtung anschließbar sind, wobei vorzugsweise an einem Ende der miteinander verbundenen Anschlussteile der Anschlussstecker und am anderen Ende der miteinander verbundenen Anschlussteile ein Abschlussstecker, welcher vorzugsweise einen Endwiderstand für ein CAN-Netzwerk umfasst, angeordnet sind. Somit reicht für den gesamten Steuerblock ein Anschlussstecker aus, wodurch Kosten und Aufwand geringgehalten sind. Der Anschlussstecker ist an das am einen Ende freie Stecker- oder Buchsenteil angeschlossen, der Abschlussstecker an das am anderen Ende freie Stecker- oder Buchsenteil. In der Regel weist ein Anschlussteil ein Buchsen- und ein Steckerteil auf. Es ist jedoch auch vorstellbar, entlang der Längskettung im Anschlussstrang jeweils ein Anschlussteil mit zwei Steckerteilen und ein Anschlussteil mit zwei Buchsenteilen abwechselnd nacheinander anzuordnen, falls für die erforderliche technische Lösung zweckdienlich.

Die Erfindung betrifft weiter eine Ventilvorrichtung mit mehreren, modular aufgebauten Ventilsektionen, die in Nebeneinanderanordnung einen Ventilblock bilden, und mit einer erfindungsgemäßen Steuereinrichtung, wobei jeder Ventilsektion zumindest eine Steuersektion zugeordnet ist, und wobei die Ventilsektionen über die Steuersektionen unabhängig voneinander ansteuer- und überwachbar sind. Der Steuerblock mit den einzelnen Steuersektionen wird anforderungsindividuell zur Ventilvorrichtung ausgestaltet und am Ventilblock angeordnet. Besonders bevorzugt ist jeder Ventilsektion eine Steuersektion zugeordnet, woraus sich ein besonders kompakter Aufbau der Ventilvorrichtung ergibt.

Bei einer bevorzugten Ausführungsform der erfindungsgemäßen Ventilvorrichtung ist die Steuereinrichtung parallel verlaufend, vorzugsweise seitlich, zur Ventilvorrichtung angeordnet und mit dieser verbunden, und insbesondere sind an den Ventilsektionen Betätigungseinrichtungen für die einzelnen Ventile vorgesehen. Die für unterschiedliche Einsatzzwecke einsetzbare Ventilvorrichtung wird über die Steuereinrichtung angesteuert, überwacht und mit Energie versorgt. Die Betätigungseinrichtungen sind beispielsweise von einer Bedienperson greifbare Steuerhebel.

Weitere Vorteile und Merkmale der Erfindung ergeben sich aus den Figuren und der nachfolgenden Beschreibung der Zeichnung. Die vorstehend genannten und die weiter angeführten Merkmale können jeweils einzeln oder in beliebigen Kombinationen an einer erfindungsgemäßen Steuereinrichtung oder einer erfindungsgemäßen Ventilvorrichtung realisiert sein. Die gezeigten Merkmale sind rein schematisch und nicht maßstäblich zu verstehen. Es zeigen:
- Fig. 1: ein Ausführungsbeispiel einer erfindungsgemäßen Steuereinrichtung mit mehreren Steuersektionen und daran angeordneten Anschlussteilen;
- Fig. 2: in perspektivischer und voneinander separierter Darstellung Anschlussteile samt Anschlussstecker und Abschlussstecker zur Ausbildung eines Anschlussstrangs sowie ein Steuersektionsteil zur Herstellung einer Verbindung mit einer entsprechenden Steuersektion;
- Fig. 3: eine vergrößerte Schnittdarstellung zur Veranschaulichung der Verbindung von zwei Anschlussteilen miteinander und mit jeweils einem Steuersektionsteil;
- Fig. 4a: eine Draufsicht von oben auf ein Anschlussteil aus den Fig. 1 und 2;
- Fig. 4b: einen Längsschnitt durch das in Fig. 4a gezeigte Anschlussteil zur Veranschaulichung der Verschaltung im Anschlussteil;
- Fig. 5: einen Schaltplan für die Verschaltung im jeweiligen Anschlussteil; und
- Fig. 6: ein Ausführungsbeispiel einer erfindungsgemäßen Ventilvorrichtung mit daran angeordneter Steuereinrichtung.

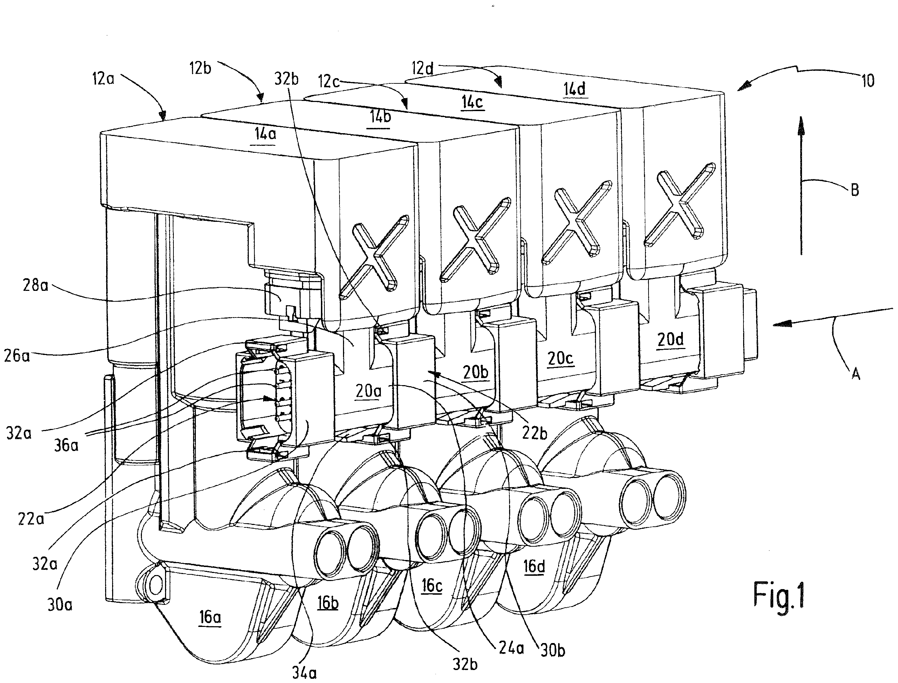

Fig. 1 zeigt in perspektivischer Ansicht eine Steuereinrichtung 10 mit vier Steuersektionen 12a, 12b, 12c, 12d, welche nebeneinander angeordnet sind und insoweit einen Steuerblock bilden. Es versteht sich, dass Steuersektionen 12a bis 12d in beliebiger, anforderungsgerechter Anzahl nebeneinander angeordnet sein können. Im gezeigten Ausführungsbeispiel weisen die Steuersektionen 12a bis 12d jeweils den gleichen Aufbau auf mit einem ersten Gehäuseteil 14a bis 14d, in der Darstellung der Fig. 1 oben gezeigt, und einem zweiten Gehäuseteil 16a bis 16d, in der Darstellung der Fig. 1 unten gezeigt, die Einheiten einer elektromagnetisch betätigbaren Aktorik und/oder einer Sensorik umfassen.

Die jeweils aus erstem 14a bis 14d und zweitem Gehäuseteil 16a bis 16d zusammengesetzten Steuersektionen 12a bis 12d weisen jeweils eine U-förmige Gestalt auf und begrenzen einen durch die U-Form vorgegebenen Einbauraum. In diesem Einbauraum sind Anschlussteile 20a bis 20d angeordnet, welche mit ihrer Oberseite jeweils an das erste Gehäuseteil 14a bis 14d einer Steuersektion 12a bis 12d angeschlossen und mit ihrer Unterseite frei im Raum angeordnet sind. Die Anschlussteile 22a bis 22d sind jeweils T-förmig ausgestaltet mit einem Steckerteil 22a, einem Buchsenteil 24a und einem Kontaktteil 26a. Über die Stecker- 22a und Buchsenteile 24a sind die Anschlussteile 20a bis 20d in direktem Eingriff miteinander verbunden und bilden eine entlang einer Richtung A ausgerichtete Längsverkettung.

Über die Kontaktteile 26a sind die Anschlussteile 20a bis 20d jeweils an ein Steuersektionsteil 28a einer Steuersektion 12a bis 12d angeschlossen und mit diesem lösbar verbunden. Die Steuersektionen 12a bis 12d sind entlang einer weiteren Richtung B ausgerichtet, welche senkrecht zur Richtung A verläuft. Dementsprechend ist auch die Verbindung über die Kontaktteile 26a der einzelnen Anschlussteile 20a bis 20d am jeweiligen Steuersektionsteil 28a entlang der weiteren Richtung B ausgerichtet. Es versteht sich, dass die beiden Richtungen A, B auch in einem von 90° abweichenden Winkel zueinander ausgerichtet sein können.

Stecker- 22a, 22b, Buchsen- 24a und Kontaktteil 26a der einzelnen Anschlussteile 20a bis 20d weisen jeweils einen im Wesentlichen rechteckförmigen Querschnitt auf, wobei am Steckerteil 22a, 22b eine Erweiterung 30a, 30b mit einem gegenüber dem Steckerteil 22a, 22b vergrößerten Querschnitt vorgesehen ist. An der Erweiterung 30a, 30b sind jeweils zwei zur Innenseite gerichtete Aufnahmen 32a, 32b ausgebildet, welche an zwei gegenüberliegenden Innenseiten, in der Darstellung der Fig. 1 oben und unten, der Erweiterung 30a, 30b angeordnet sind. Die Aufnahmen 32a, 32b dienen jeweils zur Verrastung mit einem Rastteil 34a des nächsten Anschlussteils 20a, wie in der Verrastung des ersten Rastteils 34a des ersten Anschlussteils 20a mit der an der Erweiterung 30b des zweiten Anschlussteils 20b ausgebildeten zweiten Aufnahme 32b gezeigt ist.

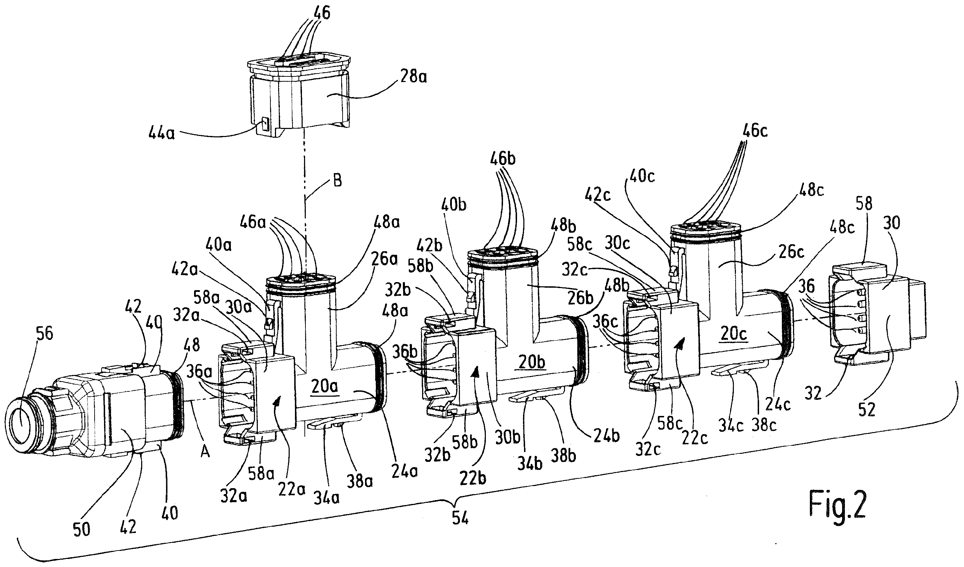

Fig. 2 zeigt in perspektivischer Darstellung drei Anschlussteile 20a, 20b, 20c, das Steuersektionsteil 28a sowie weiter einen Anschlussstecker 50 und einen Abschlussstecker 52. Die einzelnen Komponenten sind separat voneinander dargestellt und entsprechend einer späteren Einbaulage zueinander angeordnet. Der Anschlussstecker 50, die Anschlussteile 20a bis 20c und der Abschlussstecker 52 bilden einen entlang der Richtung A ausgerichteten Anschlussstrang 54. Das Steuersektionsteil 28a ist entlang der weiteren Richtung B an das erste Anschlussteil 20a anschließbar.

An den Steckerteilen 22a bis 22c sind jeweils acht Steckerelemente 36a bis 36c in zwei Reihen nebeneinander angeordnet, wobei in der Darstellung der Fig. 2 lediglich vier Steckerelemente 36a bis 36c am jeweiligen Steckerteil 22a bis 22c sichtbar sind. Die an den Buchsenteilen 24a bis 24c ausgebildeten Buchsenelemente sind verdeckt. Zur Verbindung mit den Buchsen-elementen am Buchsenteil 24c des dritten Anschlussteils 20c sind am Abschlussstecker 52 Steckerelemente 36 vorgesehen, entsprechend am Anschlussstecker 50 in der Darstellung der Fig. 2 verdeckte Buchsenelemente zur Verbindung mit den Steckerelementen 36a am Steckerteil 22a des ersten Anschlussteils 20a.

An den Oberseiten der Anschlussteile 20a bis 20c und des Steuersektionsteils 28a sind jeweils acht Kontaktelemente 46, 46a bis 46c in zwei Reihen angeordnet. Im Abschlussstecker 52 ist ein nicht gezeigter Widerstand für ein CAN-Netzwerk angeordnet. Der Anschlussstecker 50 weist eine Anschlussöffnung 56 auf, an die ein entsprechender Kabelstrang zur Versorgung des Anschlussstrangs 54 anschließbar ist. Der Anschlussstrang 54 dient sowohl der Energieversorgung als auch einer Datenweitergabe der Steuerschieberbetätigung eines elektrohydraulischen Ventils in der jeweiligen Steuersektion 12a bis 12d (vgl. Fig. 1).

Zur Sicherung des mechanischen Verbunds zwischen den Anschlussteilen 20a bis 20c untereinander sowie mit dem Anschlussstecker 50, dem Abschlussstecker 52 und dem Steuersektionsteil 28a sind Verrastungen entlang der beiden Richtungen A, B vorgesehen. Hierbei weisen die Anschlussteile 20a bis 20c jeweils am Steckerteil 22a bis 22c sowie der Abschlussstecker 52 eine Erweiterung 30, 30a bis 30c gegenüber der durch das jeweilige Teil vorgegebenen Querschnittsform auf. Die jeweilige Erweiterung 30, 30a bis 30c ist jeweils in der Art eines Hohlprofilabschnitts ausgebildet mit Erweiterungsteilen 58, 58a bis 58c, an denen jeweils eine zur Innenseite gerichtete Aufnahme 32, 32a bis 32c ausgebildet ist. In vergleichbarer Weise ist das Gehäuse des Steuersektionsteils 28a gegenüber dem Querschnitt des zugehörigen Kontaktteils 48a des ersten Anschlussteils 20a erweitert ausgebildet und weist weitere Aufnahmen 44a auf.

Das zur jeweiligen Aufnahme 30, 30a bis 30c, 44a korrespondierende Rastteil ist am jeweils anderen Teil des Verbindungsbereichs ausgebildet, Rastteile 34a bis 34c an den Buchsenteilen 24a bis 24c der Anschlussteile 20a bis 20c sowie weitere Rastteile 40, 40a bis 40c am Anschlussstecker 50 sowie an den Kontaktteilen 26a bis 26c der Anschlussteile 20a bis 20c. In der Darstellung der Fig. 2 fehlen die an der zweiten, oberen Seite der Buchsenteile 24a bis 24c ausgebildeten Rastteile. Die Rastteile 34a bis 34c, 40, 40a bis 40c sind jeweils biegeelastisch ausgebildet und mit einem Ende am zugehörigen Teil angelenkt und weisen jeweils eine Rastnase 38a bis 38c bzw. eine weitere Rastnase 42, 42a bis 42c auf.

Je nach Einsatzzweck der Steuereinrichtung 10 (vgl. Fig. 1) sind die Gehäuse der einzelnen Komponenten 20a bis 20d, 50, 52 sowie der Steuersektionen 12a bis 12d (vgl. Fig. 1) und der Steuersektionsteile 28a aus einem Kunststoffmaterial, einem Metallwerkstoff und/oder einem geeigneten Verbundwerkstoff ausgebildet. In dem dem jeweiligen Verbindungsbereich zugeordneten Endabschnitt der Kontaktteile 26a bis 26c, der Buchsenteile 24a bis 24c sowie des Anschlusssteckers 50 ist jeweils eine Dichteinrichtung 48, 48a bis 48c angeordnet, welche aus einem Elastomermaterial ausgebildet ist und zwei parallel zueinander verlaufende Dichtlinien aufweist. Die im Ausführungsbeispiel der Fig. 1 und 2 gezeigten Abschlussteile 20a bis 20d sind jeweils gleich ausgebildet. Hier sind jedoch auch unterschiedliche Ausgestaltungen und Kombinationen von Anschlussteilen unterschiedlicher Art entlang des Anschlussstrangs 54 vorstellbar.

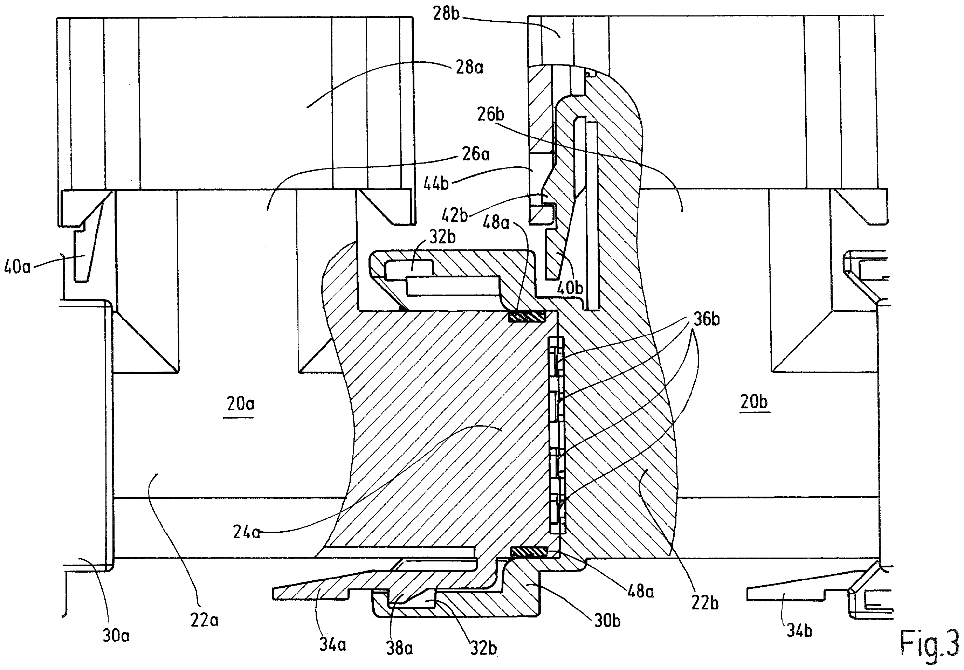

Fig. 3 zeigt im Schnitt und vergrößert den Verbindungsbereich zwischen dem ersten Anschlussteil 20a und dem zweiten Anschlussteil 20b. An der Kontaktfläche zwischen dem Buchsenteil 24a und dem Steckerteil 22b sind die Steckerelemente 36b in nicht näher bezeichnete Buchsenelemente des Buchsenteils 24a eingeführt. Im Schnitt der Fig. 3 ist eine der beiden Reihen mit jeweils vier Steckerelementen 36b gezeigt. Die Dichteinrichtung 48a ist in eine umlaufende Nut am Buchsenteil 24a eingesetzt und liegt mit ihren beiden Dichtlinien am Steckerteil 22b an. Im Bereich der Anlage der Dichteinrichtung 48a schließt sich an das Steckerteil 22b die Erweiterung 30b an. Die Erweiterung 30b umgreift derart das am Buchsenteil 24a ausgebildete Rastteil 34a, dass die am Rastteil 34a ausgebildete Rastnase 38a in die an der Erweiterung 30b ausgebildete Aufnahme 32b eingreift und somit die Lage der beiden Anschlussteile 20a, 20b zueinander fixiert.

Zum Lösen des Verbundes der beiden Anschlussteile 20a, 20b wird das Rastteil 34a in Richtung des Buchsenteils 24a bewegt und somit die Rastnase 38a aus der Aufnahme 32b geführt, so dass beide Anschlussteile 20a, 20b wieder voneinander beabstandet und gelöst werden können. Zur Ausbildung vergleichbarer Rastverbindungen sind in Fig. 3 die Erweiterung 30a am Steckerteil 22a und das Rastteil 34b am Anschlussteil 20b gezeigt. Die T-stückartigen Anschlussteile 20a, 20b sind über ihre Kontaktteile 26a, 26b mit Steuersektionsteilen 28a, 28b der Steuersektionen 12a bis 12d (vgl. Fig. 1) verbunden, wobei auch hier eine entsprechende Verrastung vorgesehen ist.

Im Unterschied zu den in der Darstellung der Fig. 3 horizontal ausgerichteten Rastteile 34a, 34b sind die an den Kontaktteilen 26a, 26b ausgebildeten weiteren Rastteile 40a, 40b vertikal ausgerichtet und mit ihrem oberen Ende am jeweiligen Kontaktteil 26a, 26b angelenkt. Die nach außen gerichtete weitere Rastnase 42b greift in eine am Steuersektionsteil 28b ausgebildete weitere Aufnahme 44b ein. Die Verrastung kann dadurch gelöst werden, dass das weitere Rastteil 40b in Richtung des Kontaktteils 26b bewegt und das Steuersektionsteil 28b vom Anschlussteil 20b beabstandet wird.

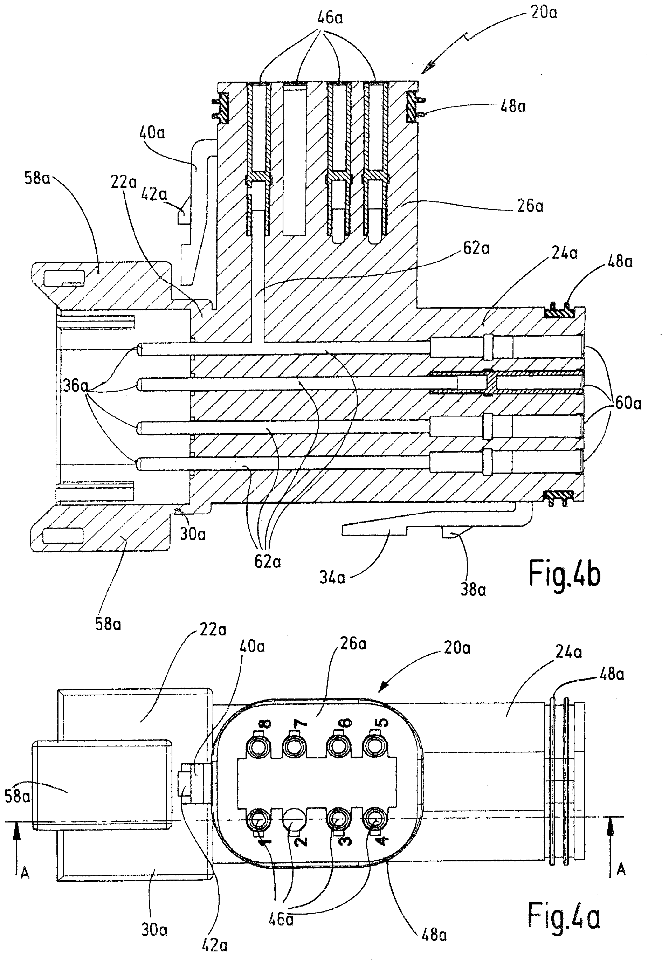

Der Draufsicht der Fig. 4a ist zu entnehmen, dass das Anschlussteil 20a das Steckerteil 22a mit der Erweiterung 30a und dem Erweiterungsteil 58a, das Buchsenteil 24a mit der Dichteinrichtung 48a und das Kontaktteil 26a mit dem weiteren Rastteil 40a und der weiteren Rastnase 42a sowie der Dichteinrichtung 48a umfasst. Die einen rechteckförmigen Querschnitt mit gerundeten Ecken aufweisende Verbindungsfläche des Kontaktteils 26a ist mit acht Kontaktelementen 46a bestückt, welche in zwei Reihen mit jeweils vier Kontaktelementen 46a angeordnet sind. In der Darstellung der Fig. 4a sind die einzelnen Kontaktelemente 46a durchnummeriert.

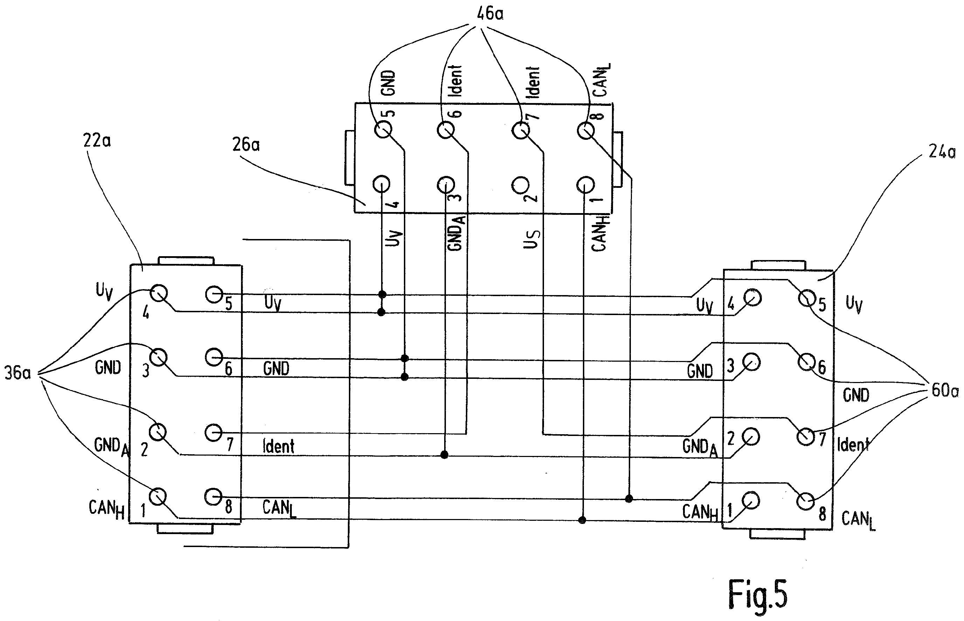

Dem in Fig. 4b gezeigten Schnitt entlang der Linie A-A ist entnehmbar, dass das Anschlussteil 20a blockartig ausgebildet ist, wobei die Steckerelemente 36a, die Kontaktelemente 46a und die Buchsenelemente 60a über Leitungen 62a miteinander verbunden und bedarfsgerecht verschaltet sind (vgl. Fig. 5). Weiter sind in der Darstellung der Fig. 4b die Erweiterungsteile 58a an der Erweiterung 30a, die Dichteinrichtungen 48a am Kontaktteil 26a und am Buchsenteil 24a sowie die beiden Rastteile 34a, 40a mit jeweils zur Außenseite gerichteten Rastnasen 38a, 42a gut erkennbar.

Der Schaltplan der Fig. 5 zeigt, wie die am Steckerteil 22a angeordneten acht Steckerelemente 36a mit den am Kontaktteil 26a ausgebildeten acht Kontaktelementen 46a und den am Buchsenteil 24a ausgebildeten acht Buchsenelementen 60a verschaltet sind. Die mit den Ziffern 1 und 8 bezeichneten Stecker- 26a, Buchsen- 60a und Kontaktelemente 46a sind jeweils miteinander verschaltet und bilden eine CAN-Bus-Ansteuerung aus mit CAN_{H}-Leitung bei Ziff. 1 und CAN_{L}-Leitung bei Ziff. 8. Die mit Ziff. 2 bezeichneten Stecker- 36a und Buchsenelemente 60a sind mit dem mit Ziff. 3 bezeichneten Kontaktelement 46a verschaltet und bilden eine Erdung GND_{A} für eine Sensorik. Das mit Ziff. 2 bezeichnete Kontaktelement 46a ist im Schaltplan der Fig. 5 nicht belegt, kann jedoch als Anschluss für eine nicht gezeigte Steuerspannung Us dienen. "H" bildet dabei die Abkürzung für "High" und "L" für "Low".

Die mit Ziff. 7 bezeichneten Stecker- 36a und Buchsenelemente 60a sind unabhängig voneinander mit den mit Ziff. 6 und 7 bezeichneten Kontaktelementen 46a verbunden und bilden jeweils einen Identifier Ident für die Positionsfindung der einzelnen Steuersektionen 12a bis 12d (vgl. Fig. 1) im Ventilblock. Die mit Ziff. 3 und 6 bezeichneten Stecker- 36a und Buchsenelemente 60a sind jeweils miteinander und über eine gemeinsame Leitung mit dem mit Ziff. 5 bezeichneten Kontaktelement 46a verbunden und bilden eine doppelt ausgeführte Erdung GND aus. In vergleichbarer Weise sind die mit den Ziff. 4 und 5 bezeichneten Stecker- 36a und Buchsenelemente 60a jeweils miteinander und über eine gemeinsame Leitung mit dem mit Ziff. 4 bezeichneten Kontaktelement 46a verbunden und bilden eine doppelt ausgeführte Spannungsversorgung Uv aus.

Es versteht sich, dass die Steckerelemente 36a, die Buchsenelemente 60a und die Kontaktelemente 46a in einer von acht verschiedenen Anzahl am jeweiligen Teil 22a, 26a und 24a ausgebildet und angeordnet sein können. Die Verschaltung wird jeweils anforderungsgerecht vorgenommen und kann von dem in Fig. 5 gezeigten Schaltplan abweichen.

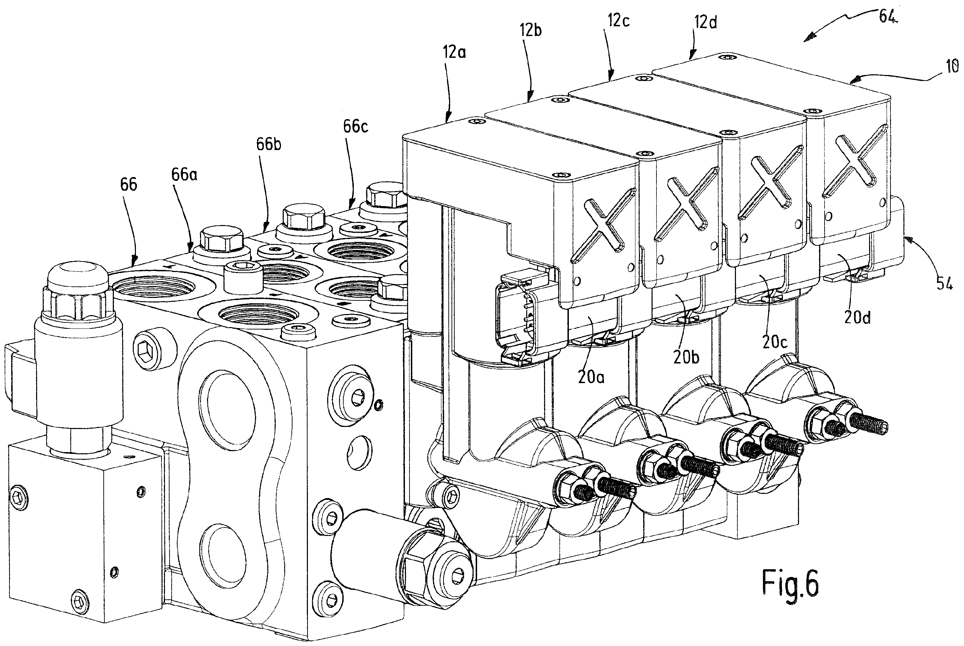

Fig. 6 zeigt in perspektivischer Ansicht eine Ventilvorrichtung 64 mit insgesamt fünf Ventilsektionen 66, 66a, 66b, 66c, von denen eine in der Darstellung der Fig. 6 verdeckt ist. Die Ventilsektionen 66, 66a-66c begrenzen mit ihrer quaderförmigen Gestalt jeweils Aufnahmeräume für einzelne Ventile und bilden im Gesamten in Nebeneinanderanordnung einen Ventilblock. Zur Ansteuerung und Überwachung der Ventilvorrichtung 64 ist eine Steuereinrichtung 10 vergleichbar der Darstellung der Fig. 1 vorgesehen und am Ventilblock seitlich angeordnet. Hierbei ist jeder Ventilsektion 66a-66c jeweils eine Steuersektion 12a bis 12d zugeordnet, die einzeln mit dieser verbunden ist. Eine in der Darstellung der Fig. 6 links, benachbart zur ersten Ventilsektion 66a, angeordnete weitere Ventilsektion 66 ist ohne separate Steuersektion gezeigt. Es ist vorstellbar, hier eine zusätzliche Steuersektion links zur ersten Steuersektion 12a anzuordnen und mit der ersten Steuersektion 12a zu verbinden und an die weitere Ventilsektion 66 anzuschließen.

Über den aus den einzelnen Anschlussteilen 20a bis 20d gebildeten Anschlussstrang 54 sind die Ventilsektionen 66, 66a-66c der Ventilvorrichtung 64 jeweils einzeln ansteuer- und überwachbar. Hierfür sind in den einzelnen Steuersektionen 12a bis 12d nicht gezeigte Einheiten einer elektromagnetisch betätigbaren Aktorik und/oder einer Sensorik vorgesehen. Die einzelnen Ventilsektionen 66, 66a-66c des Ventilblocks und die einzelnen Steuersektionen 12a bis 12d des Steuerblocks der Steuereinrichtung 10 können jeweils einzeln gefertigt, bevorratet und/oder vertrieben werden. Die baukastenartige Ausgestaltung der Ventilvorrichtung 64 mit der Steuereinrichtung 10 ermöglicht eine individuelle und anforderungsgerechte Ausgestaltung des für unterschiedliche industrielle Anwendungen einsetzbaren Ventilblocks der Ventilvorrichtung 64.

## Patentansprüche

1. Steuereinrichtung mit mehreren, modular aufgebauten Steuersektionen (12a-12d), die in Nebeneinanderanordnung einen Steuerblock bilden und Einheiten einer elektromagnetisch betätigbaren Aktorik und/oder einer Sensorik aufweisen zur Ansteuerung bzw. Überwachung einer Ventilvorrichtung, die an eine zentrale Energieversorgung und/oder Überwachungseinrichtung anschließbar sind, die einzelne, der jeweiligen Steuersektion (12a-12d) zugeordnete Anschlussteile (20a-20d) aufweisen, die in Reihe hintereinander und miteinander verschaltet sind, wobei zumindest ein Teil der eingesetzten Anschlussteile (20a-20d) in kabelloser Weise mit ihren einander zugewandten und benachbarten Stecker- (22a-22c) und Buchsenteilen (24a-24c) in direktem Eingriff miteinander sind,
wobei zumindest ein Teil der eingesetzten Anschlussteile (20a-20d) T-stückartig ausgebildet ist mit jeweils einander gegenüberliegend angeordneten Stecker- (22a-22c) und Buchsenteilen (24a-24c) und einem quer, vorzugsweise senkrecht, dazu angeordneten und ausgerichteten Kontaktteil (26a-26c) zum Anschluss an die jeweilige Steuersektion (12a-12d),
wobei die miteinander verbundenen T-stückartigen Anschlussteile (20a-20d) mit ihren miteinander verbundenen Stecker- (22a-22c) und Buchsenteilen (24a-24c) einen quer, vorzugsweise senkrecht, zur Nebeneinanderanordnung der Steuersektionen (12a-12d) verlaufenden Anschlussstrang (54) bilden, welcher über die in Richtung (B) der Steuersektionen (12a-12d) ausgerichteten Kontaktteile (26a-26c) an diese angeschlossen ist,
wobei zur Lagefixierung der miteinander verbundenen und/oder der an die jeweilige Steuersektion angeschlossenen Anschlussteile Rastmittel vorgesehen sind, und
**dadurch gekennzeichnet, dass**
in einem einem jeweiligen Verbindungsbereich zugeordneten Endabschnitt der Kontaktteile (26a-26c) und der Buchsenteile (24a-24c) eine Dichteinrichtung (48a-48c) angeordnet ist.

2. Steuereinrichtung nach Anspruch 1, **dadurch gekennzeichnet, dass** der Verbund der einzelnen Teile durch Verrastungen oder Verschraubungen in Richtung (A) des Anschlussstrangs (54) und der Ausrichtung (B) der an die jeweilige Steuersektion (12a-12d) angeschlossenen Kontaktteile (26a-26c) fixiert ist.

3. Steuereinrichtung nach Anspruch 1 oder 2, **dadurch gekennzeichnet, dass** die Rastmittel in der Form mindestens eines Rastteils (34a-34c, 40, 40a) vorgesehen sind, welches in eine zugehörige Aufnahme (32, 32a-32c, 44a) am jeweils anderen Anschlussteil (20a-20d) bzw. am entsprechenden Steuersektionsteil (28a) eingreift.

4. Steuereinrichtung nach Anspruch 3, **dadurch gekennzeichnet, dass** das jeweilige Anschlussteil (20a-20d) und/oder das jeweilige Steuersektionsteil (28a ) zumindest in einem Verbindungsbereich eine Erweiterung (30, 30a-30c) gegenüber dem Querschnitt des Anschluss-(20a-20d) oder Steuersektionsteils (28a) und im Bereich der Erweiterung (30, 30a-30c) eine zur Innenseite gerichtete Aufnahme (32, 32a-32c, 44a) oder ein Rastteil (34a- 34c, 40, 40a) mit einer Rastnase (38a-38c, 42, 42a) aufweist, und dass an dem dem Verbindungsbereich zugeordneten Buchsen- (24a-24c), Stecker- (22a-22c), Kontakt- (26a-26c) oder Steuersektionsteil (28a) ein korrespondierendes Rastteil (34a-34c, 40, 40a) mit einer zur Außenseite gerichteten Rastnase (38a-38c, 42, 42a) oder eine Aufnahme (32, 32a-32c, 44a) ausgebildet ist, welche beim Ineinanderführen von Stecker- (22a-22c) und Buchsenteil (24a-24c) bzw. von Steuersektions-(28a) und Kontaktteil (26a-26c) in die jeweilige Aufnahme (32, 32a-32c, 44a) eingreift bzw. die jeweilige Rastnase (38a-38c, 42, 42a) aufnimmt.

5. Steuereinrichtung nach einem der vorhergehenden Ansprüche, **dadurch gekennzeichnet, dass** jeweils ein oder mehrere, vorzugsweise acht, Steckerelemente (36, 36a-36c) am Steckerteil (22a-22c), Buchsenelemente (60a) am Buchsenteil (24a-24c) und Kontaktelemente (46, 46a-46c) am Kontaktteil (26a-26c) ausgebildet und angeordnet sind, wobei die Stecker- (36, 36a-36c), Buchsen- (60a) und Kontaktelemente (46, 46a-46c) anforderungsgerecht miteinander verschaltet sind.

6. Steuereinrichtung nach einem der vorhergehenden Ansprüche, **dadurch gekennzeichnet, dass** in der Verschaltung des jeweiligen Anschlussteils (20a-20d) vorgesehen sind:
- eine Spannungsversorgung (Uv), vorzugsweise über ein oder zwei Stecker- (36, 36a-36c) und ein oder zwei Buchsenelemente (60a), die paarweise miteinander und mit einem Kontaktelement (46, 46a-46c) verbunden sind, und/oder
- eine Erdung (GND), vorzugsweise über ein oder zwei Stecker-(36, 36a-36c) und ein oder zwei Buchsenelemente (60a), die paarweise miteinander und mit einem Kontaktelement (46, 46a-46c) verbunden sind, und/oder
- eine Erdung für Sensoren (GND_{A}), vorzugsweise über ein Stecker-(36, 36a-36c) und ein Buchsenelement (60a), die paarweise miteinander und mit einem Kontaktelement (46, 46a-46c) verbunden sind, und/oder
- eine CAN-Bus-Ansteuerung (CAN_{H}, CAN_{L}) vorzugsweise über ein oder zwei Stecker- (36, 36a-36c) und ein oder zwei Buchsenelemente (60a), die paarweise miteinander und jeweils mit einem Kontaktelement (46, 46a-46c) verbunden sind, und/oder
- ein Identifier (Ident), vorzugsweise über ein Stecker- (36, 36a-36c) und ein Buchsenelement (60a), die jeweils mit einem Kontaktelement (46, 46a-46c) verbunden sind, und/oder
- ein Steuerspannungsanschluss (Us), vorzugsweise über ein Stecker- (36, 36a-36c) oder Buchsenelement (60a), das mit einem Kontaktelement (46, 46a-46c) verbunden ist.

7. Steuereinrichtung nach einem der vorhergehenden Ansprüche, **dadurch gekennzeichnet, dass** die miteinander verbundenen Anschlussteile (20a-20d) über zumindest einen Anschlussstecker (50) an die zentrale Energieversorgung und/oder Überwachungseinrichtung anschließbar sind, wobei vorzugsweise an einem Ende der miteinander verbundenen Anschlussteile (20a-20d) der Anschlussstecker (50) und am anderen Ende der miteinander verbundenen Anschlussteile (20a-20d) ein Abschlussstecker (52), welcher vorzugsweise einen Endwiderstand für ein CAN-Netzwerk umfasst, angeordnet sind.

8. Ventilvorrichtung mit mehreren, modular aufgebauten Ventilsektionen, die in Nebeneinanderanordnung einen Ventilblock bilden, und mit einer Steuereinrichtung nach einem der vorhergehenden Ansprüche, wobei jeder Ventilsektion zumindest eine Steuersektion zugeordnet ist, und wobei die Ventilsektionen über die Steuersektionen unabhängig voneinander ansteuer- und überwachbar sind.

9. Ventilvorrichtung nach Anspruch 8, **dadurch gekennzeichnet, dass** die Steuereinrichtung parallel verlaufend, vorzugsweise seitlich, zur Ventilvorrichtung angeordnet und mit dieser verbunden ist, und dass insbesondere an den Ventilsektionen Betätigungseinrichtungen für die einzelnen Ventile vorgesehen sind.

## Claims

1. Control device with a plurality of modularly constructed control sections (12a-12d), which form a control block when arranged side by side, and have units of an electromagnetically operable actuator system and/or sensor system for actuating or monitoring a valve device, which units can be connected to a central power supply and/or monitoring device and have individual connecting parts (20a-20d) assigned to the respective control section (12a-12d), which connecting parts are connected in series and to one another, wherein at least some of the connecting parts (20a-20d) used are in direct engagement with one another with their mutually facing and adjacent plug (22a-22c) and socket parts (24a-24c) in a wireless manner,
wherein at least some of the connecting parts (20a-20d) used are of T-piece-like design with plug (22a-22c) and socket parts (24a-24c) each arranged opposite one another and a contact part (26a-26c) arranged and aligned transversely, preferably perpendicularly, thereto for connection to the respective control section (12a-12d),
wherein the interconnected T-piece-like connecting parts (20a-20d) with their interconnected plug (22a-22c) and socket parts (24a-24c) form a connecting string (54), which extends transversely, preferably perpendicularly, to the side-by-side arrangement of the control sections (12a-12d), and which is connected thereto via the contact parts (26a-26c) aligned in the direction (B) of said control sections (12a-12d),
wherein latching means are provided for fixing the position of the interconnected connecting parts and/or the connecting parts connected to the respective control section, and
**characterised in that**, a sealing device (48a-48c) is arranged in an end portion of the contact parts (26a-26c) and the socket parts (24a-24c) which is assigned to a respective connection region.

2. Control device according to claim 1, **characterised in that** the combination of the individual parts is fixed by snap-fittings or screw connections in direction (A) of the connecting string (54) and the alignment (B) of the contact parts (26a-26c) connected to the respective control section (12a-12d).

3. Control device according to claim 1 or 2, **characterised in that** the latching means are provided in the form of at least one latching part (34a-34c, 40, 40a), which engages in an associated receptacle (32, 32a-32c, 44a) on the respective other connecting part (20a-20d) or on the corresponding control section part (28a).

4. Control device according to claim 3, **characterised in that** the respective connecting part (20a-20d) and/or the respective control section part (28a) has, at least in a connection region, an extension (30, 30a-30c) with respect to the cross-section of the connecting (20a-20d) or control section part (28a) and, in the region of the extension (30, 30a-30c), a receptacle (32, 32a-32c, 44a) directed towards the inside or a latching part (34a- 34c, 40, 40a) with a snap tab (38a-38c, 42, 42a), and **in that**, on the socket (24a-24c), plug (22a-22c), contact (26a-26c) or control section part (28a) associated with the connection region, a corresponding latching part (34a-34c, 40, 40a) with a snap tab (38a-38c, 42, 42a), which is directed towards the outside or a receptacle (32, 32a-32c, 44a), is formed, which latching part, when the plug part (22a-22c) and the socket part (24a-24c) or the control section part (28a) and the contact part (26a-26c) are inserted into one another, engages in the respective receptacle (32, 32a-32c, 44a) or receives the respective snap tab (38a-38c, 42, 42a).

5. Control device according to one of the preceding claims, **characterised in that** in each case one or more, preferably eight, plug elements (36, 36a-36c) are formed and arranged on the plug part (22a-22c), socket elements (60a) are formed and arranged on the socket part (24a-24c) and contact elements (46, 46a-46c) are formed and arranged on the contact part (26a-26c), wherein the plug (36, 36a-36c), socket (60a) and contact elements (46, 46a-46c) are connected to one another according to requirements.

6. Control device according to one of the preceding claims, **characterised in that** provided in the circuitry of the respective connecting part (20a-20d) are:
- a voltage supply (Uv), preferably via one or two plug elements (36, 36a-36c) and one or two socket elements (60a), which are connected to one another in pairs and to a contact element (46, 46a-46c), and/or
- an earth (GND), preferably via one or two plug elements (36, 36a-36c) and one or two socket elements (60a), which are connected to one another in pairs and to a contact element (46, 46a-46c), and/or
- an earth for sensors (GNDA), preferably via a plug element (36, 36a-36c) and a socket element (60a), which are connected to one another in pairs and to a contact element (46, 46a-46c), and/or
- a CAN bus control (CAN_{H}, CAN_{L}) preferably via one or two plug elements (36, 36a-36c) and one or two socket elements (60a), which are connected to one another in pairs and in each case to a contact element (46, 46a-46c), and/or
- an identifier (Ident), preferably via a plug element (36, 36a-36c) and a socket element (60a), each of which is connected to a contact element (46, 46a-46c), and/or
- a control voltage connection (Us), preferably via a plug element (36, 36a-36c) or socket element (60a), which is connected to a contact element (46, 46a-46c).

7. Control device according to one of the preceding claims, **characterised in that** the interconnected connecting parts (20a-20d) can be connected to the central power supply and/or monitoring device via at least one connecting plug (50), wherein the connecting plug (50) is preferably arranged at one end of the interconnected connecting parts (20a-20d) and a terminating plug (52), which preferably comprises a terminating resistor for a CAN network, is arranged at the other end of the interconnected connecting parts (20a-20d).

8. Valve device with a plurality of modularly constructed valve sections, which form a valve block when arranged side by side and with a control device according to one of the preceding claims, wherein at least one control section is assigned to each valve section, and wherein the valve sections can be controlled and monitored independently of one another via the control sections.

9. Valve device according to claim 8, **characterised in that** the control device is arranged parallel, preferably laterally, to the valve device and is connected thereto, and **in that** actuating devices for the individual valves are provided in particular on the valve sections.

## Revendications

1. Dispositif de commande, comprenant plusieurs parties (12a-12d) de commande de constitution modulaire, qui, suivant un agencement côte à côte, forment un bloc de commande et ont des unités d'un système d'actionnement et/ou de détection pouvant être actionné électromagnétiquement pour la commande ou le contrôle d'un système de soupape, qui peuvent être raccordées à une alimentation centrale d'énergie ou à un dispositif de contrôle, qui ont diverses parties (20a-20d) de raccordement associées à la partie (12a-12d) de commande respective, qui sont montées en série les unes derrière les autres et entre elles, dans lequel au moins une partie des parties (20a-20d) de raccordement utilisées sont entre elles en prise directe d'une façon sans câble par leurs parties mâles (22a-22c) et femelles (24a-24c) voisines et tournées l'une vers l'autre,
dans lequel au moins une partie des parties (20a-20d) de raccordement utilisées est constituée en type de pièce en T ayant des parties mâle (22a-22c) et femelle (24a-24c) opposées l'une à l'autre et une partie (26a-26c) de contact disposée et orientée transversalement à cela, de préférence perpendiculairement, pour le raccordement à la partie (12a-12d) respective de commande,
dans lequel les parties (20a-20d) de raccordement reliées entre elles de type de pièce en T forment, par leurs parties mâle (22a-22c) et femelle (24a-24c) reliées entre elles, un tronçon (54) de raccordement, qui s'étend transversalement, de préférence perpendiculairement, à l'agencement côte à côte des parties (12a-12d) de commande et qui, par les parties (26a-26c) de contact dirigées dans la direction (B) des parties (12a-12d) de commande, est raccordé à celles-ci,
dans lequel, pour l'immobilisation en position des parties de raccordement reliées entre elles et/ou raccordées à la partie de commande respective, il est prévu des moyens d'encliquetage, et
**caractérisé en ce que**
un dispositif (48a-48c) d'étanchéité est disposé dans une zone d'extrémité associée à une partie de liaison respective des parties (26a-26c) de contact et des parties (24a-24c) femelles.

2. Dispositif de commande suivant la revendication 1, **caractérisé en ce que** le composite des diverses parties est immobilisé par encliquetage ou vissage dans la direction (A) du tronçon (54) de raccordement et dans la direction (B) des parties (26a-26c) de contact raccordées à la partie (12a-12d) de commande respective.

3. Dispositif de commande suivant la revendication 1 ou 2, **caractérisé en ce que** les moyens d'encliquetage sont prévus sous la forme d'au moins une partie (34a-34c, 40, 40a) d'encliquetage, qui pénètre dans un logement (32, 32a-32c, 44a) associé de l'autre partie (20a-20d) de raccordement respective ou de la partie (28a) correspondante de la partie de commande.

4. Dispositif de commande suivant la revendication 3, **caractérisé en ce que** la partie (20a-20d) respective de raccordement et/ou la partie (28a) respective de la partie de commande a, au moins dans une zone de liaison, un évasement (30, 30a-30c) par rapport à la section transversale de la partie (20a-20d) de raccordement ou de la partie (28a) de la partie de commande et, dans la zone de l'évasement (30, 30a-30c), un logement (32, 32a-32c, 44a) dirigé vers la face intérieure ou une partie (34a-34c, 40, 40a) d'encliquetage ayant un bec (38a-38c, 42, 42a) d'encliquetage, et **en ce que**, sur la partie femelle (24a-24c), mâle (22a-22c) de contact (26a-26c) ou la partie (28a) de la partie de commande associée à la zone de liaison, est constituée une partie (34a-34c, 40, 40a) correspondante d'encliquetage ayant un bec (38a-38c, 42, 42a) d'encliquetage dirigé vers la face extérieure ou un logement (32, 32a-32c, 44a) qui, lorsque la partie mâle (22a-22c) et femelle (24a-24c) ou la partie (28a) de commande et la partie (26a-26c) de contact viennent l'une dans l'autre, pénètre dans le logement (32, 32a-32c, 44a) respectif ou reçoit le bec (38a-38c, 42, 42a) d'encliquetage respectif.

5. Dispositif de commande suivant l'une des revendications précédentes, **caractérisé en ce que**, respectivement un ou plusieurs, de préférence huit, éléments (36, 36a-36c) mâles sont constitués et disposés sur la partie (22a-22c) mâle, éléments (60a) femelles, sur la partie (24a-24c) femelle et éléments (46, 46a-46c) de contact, sur la partie (26a-26c) de contact, dans lequel les éléments mâles (36, 36a-36c), femelles (60a) et de contact (46, 46a-46c) sont connectés les uns aux autres conformément à ce qui est demandé.

6. Dispositif de commande suivant l'une des revendications précédentes, **caractérisé en ce que**, dans la connexion de la partie (20a-20d) de raccordement, sont prévus :
- une alimentation (Uv) en tension, de préférence en passant par un ou deux éléments mâles (36, 36a-36c) et un ou deux éléments (60a) femelles, qui sont reliés entre eux paire par paire et à un élément (46, 46a-46c) de contact, et/ou
- une mise à la terre (GND), de préférence en passant par un ou deux éléments mâles (36, 36a-36c) et un ou deux éléments (60a) femelles, qui sont reliés entre eux paire par paire et à un élément (46, 46a-46c) de contact, et/ou
- une mise à la terre pour des capteurs (GND_{A}), de préférence par un élément (36, 36a-36c) mâle et un élément (60a) femelle, qui sont reliés entre eux paire par paire et à un élément (46, 46a-46c) de contact, et/ou
- une commande (CAN_{H}, CAN_{L}) de bus CAN en passant, de préférence par un ou deux éléments (36, 36a-36c) mâles et un ou deux éléments (60a) femelles, qui sont reliés entre eux paire par paire et respectivement à un élément (46, 46a-46c) de contact, et/ou
- un identifiant (Ident) en passant, de préférence par un élément mâle (36, 36a-36c) et un élément (60a) femelle, qui sont reliés respectivement à un élément (46, 46a-46c) de contact, et/ou
- une borne (Us) de tension de commande, en passant de préférence par un élément (36, 36a-36c) mâle ou un élément (60a) femelle, qui est relié à un élément (46, 46a-46c) de contact.

7. Dispositif de commande suivant l'une des revendications précédentes, **caractérisé en ce que** les parties (20a-20d) de raccordement reliées entre elles peuvent être raccordées par au moins une prise (50) d'entrée à l'alimentation centrale en énergie et/ou à un dispositif de contrôle, dans lequel sont disposées, de préférence à une extrémité des parties (20a-20d) de raccordement reliées entre elles, la prise (50) d'entrée, à l'autre extrémité des parties (20a-20d) de raccordement reliées entre elles, une prise (52) de sortie, qui comprend, de préférence une résistance d'extrémité pour un réseau CAN.

8. Système de soupape, comprenant plusieurs parties de soupape de constitution modulaires, qui forment un bloc de soupape en un agencement côte à côte et comprenant un dispositif de commande suivant l'une des revendications précédentes, dans lequel, à chaque partie de soupape, est associée au moins une partie de commande, et dans lequel les parties de soupape peuvent être commandées et contrôlées indépendamment les unes des autres par les parties de commande.

9. Système de soupape suivant la revendication 8, **caractérisé en ce que** le dispositif de commande est disposé en s'étendant parallèlement, de préférence latéralement, au système de soupape et est relié à celui-ci, et **en ce que** des dispositifs d'actionnement des diverses soupapes sont prévus, en particulier sur les parties de soupape.
